# EUROPEAN PATENT SPECIFICATION

(11) **EP 0 527 493 B1**
(45) Date of publication and mention of the grant of the patent: **09.08.1995**
(21) Application number: 92113811.1
(22) Date of filing: 13.08.1992
(51) Int. Cl.: C08K 5/00, C08L 53/02, C08L 55/02

(54) **Flame-retarded, high-impact-strength styrene polymer formulations**
Flammwidrige, schlagfeste Styrenepolymerzusammensetzungen
Compositions de polymères de styrène résistant à l'impact à combustion retardée

(30) Priority: 14.08.1991 US 745003; 14.08.1991 US 744873
(43) Date of publication of application: 17.02.1993
(73) Proprietor: ALBEMARLE CORPORATION, Richmond, Virginia 23219 (US)
(72) Inventor: Doucet, David Kim, Baton Rouge, Louisiana 70810 (US); Jones, Janet Faye, Baton Rouge, Louisiana 70810 (US); Landry, Susan Duncan, Baton Rouge, Louisiana 70820 (US); Pettigrew, Francis Alexander, Baton Rouge, Louisiana 70820 (US); Reed, Jon Shannon, Baton Rouge, Louisiana 70817 (US); Torres, James Elton, Baton Rouge, Louisiana 70816 (US)
(74) Representative: Sandmair, Kurt, Dr. Dr.

(56) References cited:
- EP-A- 0 014 731
- FR-A- 2 239 497
- FR-A- 2 343 015
- US-A- 3 971 758
- MODERN PLASTICS, March 1994, pages 48-52, Robert D. Leaversuch,"Muscular"commodity resins are challenging molding stalwarts."
- ENCYCLOPEDIA OF CHEMICAL TECHNOLOGY, Kirk-Othmer, 3rd edition, Vol.21, page 803.

## Description

### Field of Invention

This invention relates to thermoplastic synthetic resin formulations, especially HIPS (high impact polystyrene) and ABS (acrylonitrile-butadiene-styrene) resins flame-retarded with at least one brominated organic flame retardant, as well as a method for producing the formulations.

### Background

HIPS and ABS resins are well known rubber-modified styrenic polymers which offer excellent mechanical properties as well as good chemical resistance. To modify their properties, the polymers are typically compounded with various additives, such as impact modifiers, stabilizers, processing aids, pigments, and synergists, which may constitute up to about 50% of the formulated resins.

The additives may be incorporated into the resins in various ways. For example, solid additives may be dry-blended with the resins by mixing the solids, heating to soften and homogenize the mass, and then sheeting, chopping, and pelletizing the formulation.

Incorporation of the various additives is not a trivial matter, and the properties of articles made from the formulated resin can be affected by the manner in which it is done.

A flame retardant, such as a halogenated organic compound, is often incorporated into a formulated HIPS or ABS resin so as to constitute as much as about 30 wt% of the formulation. Such incorporation can adversely affect the properties, other than the flammability, of the formulated resin. For example, a flame retardant having a high melting point range, such as decabromodiphenylethane or decabromodiphenyl oxide, will have a filler-type effect on the resin formulation, whereas a flame retardant having a lower melting point range will have a plasticizer effect. Because of the effect flame retardants have on articles made from such resin formulations, improvements in such formulations and formulation techniques are highly desirable and of significant commercial importance.

FR-A-2 343 015 discloses to form a granulate from a flame-retardant and a thermoplastic compound to facilitate the production process using these flame-retardants.

### Summary of Invention

It has been found that a significant net increase in the impact strength of articles prepared from a flame-retarded HIPS or ABS resin can be provided by incorporating the flame retardant via a concentrate, or masterbatch, which is a homogeneous blend comprising the flame retardant and a polymeric impact modifier and optionally also containing other additives ad/or a minor amount of HIPS or ABS resin sufficient to provide a homogeneous blend of the masterbatch components.

When a flame-retarded formulation comprising (A) at least 50 wt% HIPS resin, 5-25 wt% halogenated flame retardant, 1-12 wt% polymeric impact modifier, and 0-6 wt% flame retardant synergist or (B) at least 50 wt% ABS resin, 5-30 wt% halogenated flame retardant, 8-38 wt% polymeric impact modifier, and 0-6 wt% flame retardant synergist is prepared by such a masterbatching process in which the concentrate is formed and dry blended with the HIPS or ABS resin, articles made from the formulation have enhanced IZOD impact strength as determined by ASTM D 256-88. In fact, it has surprisingly, and quite unexpectedly, been found that the IZOD impact strength of such articles is dramatically increased over that of articles prepared from comparable formulations in which the ingredients are combined without initially forming a concentrate or masterbatch of the flame retardant and impact modifier.

### Detailed Description

The HIPS resins formulated in the practice of the invention are rubber-modified polymers or copolymers of styrenic compounds, such as styrene, α-alkylstyrenes, and the ar-halo- and ar-alkyl-substituted derivatives thereof. Although preparable in other ways, they are usually obtained by polymerizing one or more styrenic compounds in the presence of an elastomer, such as polybutadiene, or an elastomer-forming monomer, such as butadiene, to form a graft or block copolymer.

When the resin component of the formulation is HIPS, it can be selected from the many resins available in commerce. Such resins include the Dow Styron® resins, for example, which are styrene/butadiene copolymers. The HIPS resin component of the formulated HIPS resin of this invention comprises at least 50 wt%, usually at least about 65 wt% of the formulation and can comprise as much as about 85 wt% of the formulation.

The ABS resins formulated in the practice of the invention are the known thermoplastics which include acrylonitrile, butadiene, and styrene structural units in various chemical combinations; generally comprise a rigid styrene/acrylonitrile continuous phase in combination with a polybutadiene disperse phase; and frequently contain a graft copolymer of small amounts of styrene and acrylonitrile on polybutadiene chains to bridge the rigid and elastomer phases.

When the resin component of the formulation is ABS, it can be selected from the many resins available in commerce. Such resins include GE Cycolac® resins, Monsanto Lustran® resins, and Dow Magnum® resins, for example. The ABS resin component of the formulated ABS resin of this invention comprises at least about 50 wt% of the formulation and can comprise as much as about 70 wt% of the formulation.

One of the additives which will be present in the formulated resin of this invention is one or more flame retardants, and halogenated flame retardants have been recommended and employed in that application. Halogenated flame retardants especially useful in the practice of this invention are selected from the group consisting of tetrahalobisphenol-A, N,N'-bis(tetrahalophthalimide), N,N'-ethylenebis(terahalophthalimide), halogenated polystyrene, and pentahalobenzyl acrylate, in all of which halo is selected from chloro and bromo, and also bis-halophenyl compounds represented by the following structural formula which are solids at ambient temperature: 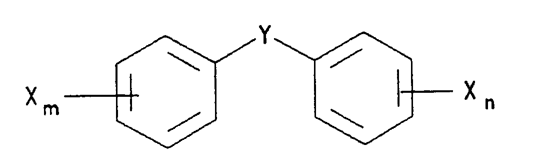
in which formula each X is selected independently from chlorine and bromine; m and n can be the same or different and can range from 1 to 5; Y is selected from oxygen, alkylene, -NR- (where R is selected from hydrogen and hydrocarbyl), alkylenedioxy, aryldioxy, and a chemical bond. Alkylene is preferably lower alkylene, i.e., straight chain or branched C₁-C₆, such as methylene, ethylene, isopropylene, butylene, and t-butylene ―methylene or ethylene being preferred. Hydrocarbyl includes alkylene, especially lower alkylene, but also unsaturated alkylene and aromatic groups such as phenyl and alkylphenyl or halophenyl. Alkylenedioxy includes,-e.g., methylenedioxy and 1,2-dioxyethylene, while aryldioxy includes dioxyphenyl, for example. In the preferred flame retardants, halo and X are bromo. Among the aforesaid flame retardants the bis-halophenyl compounds are preferred, and among these compounds, decabromodiphenyl oxide, decabromodiphenyl ethane, 1,2-bis(tribromophenoxy)ethane, and decabromodiphenyl amine are especially attractive.

In addition to one or more halogenated flame retardants, the formulated resin of this invention optionally includes up to about 6 wt%, e.g, 2-6 wt%, of a flame retardant synergist. A number of materials, such as metal oxides (e.g., iron oxide. tin oxide, zinc oxide, aluminum trioxide, alumina, antimony tri- and pentoxide) and metal hydroxides and boron compounds (e.g., zinc borate), as well as antimony silicates and ferrocene, are known to enhance the effectiveness of flame retardants, especially halogenated flame retardants. A particularly effective and preferred synergist is antimony trioxide. The flame retardant synergist can be combined with the flame retardant and impact modifier in the concentrate or masterbatch, or the synergist can be admixed with the resin component of the formulation.

In addition to flame retardant, the formulated HIPS of this invention includes one or more polymeric impact modifiers. It is well known that the addition of certain materials to an ABS or HIPS resin tends to toughen articles molded therefrom. Among these materials are styrene/butadiene/styrene triblock copolymer, styrene/isoprene/styrene triblock copolymer, styrene/butadiene diblock copolymer, polycaprolactone, and functionalized ethylene/propylene copolymers, and ― in the case of ABS resins ― poly(haloolefins). Among these impact modifiers, a styrene/butadiene/styrene triblock copolymer is especially effective in both HIPS and ABS; and it is preferred to use that block copolymer together with a halogenated polyolefin resin, such as chlorinated polyethylene, in ABS.

The concentrate or masterbatch of this invention can be formed by conventional techniques such as by combining, either continuously or batchwise, the flame retardant, impact modifier, and optional additives in a stirred kettle, drum mixer, mixing tube, mechanical high-intensity mixer, kneader, or extruder whereby a homogeneous blend of the concentrate or masterbatch is obtained. It will of course be recognized that only those innocuous ingredients which do not adversely affect the IZOD impact strength of articles made from the fully formulated HIPS or ABS resin will be included in the concentrate or masterbatch. Such a determination can be made empirically by simple trial and error techniques. Accordingly, the optional additives may be selected from pigments, flame retardant synergists, thermal stabilizers, plasticizers, antistatic agents, ultraviolet stabilizers, blowing agents, fillers, reinforcing rubbers, and the like.

The temperature for forming the concentrate or masterbatch of this invention is not critical, provided the temperature is low enough to avoid thermal degradation of the concentrate, yet high enough to provide a homogeneous blend of the concentrate's components. Those skilled in the art can readily determine suitable processing temperatures.

After the concentrate or masterbatch is formed, it is combined with the HIPS or ABS resin to form the flame retardant resin formulation. Such a combination can be obtained by the use of a single or twin screw extruder, a high intensity mixer, or a continuous mixer. It is understood of course that, when an extruder is used, the concentrate and the resin may be combined and fed to the extruder, or the concentrate and resin may be fed to the extruder separately.

The following examples are given to illustrate the invention and are not intended as a limitation thereof. Unless otherwise specified, quantities mentioned in these examples are quantities by weight.

### COMPARATIVE EXAMPLE A

A formulated HIPS resin was prepared and tested by:
(1) shaking the following ingredients together in a plastic bag for two minutes: 80.5 parts of HIPS resin (Dow Styron® 492T), 3.0 parts of styrene/butadiene/styrene block copolymer impact modifier (Kraton® D4141 of Shell Chemical Co.), 12.0 parts of decabromodiphenylethane flame retardant (Ethyl Corp.), 4.0 parts of Sb₂O₃ synergist, and 0.5 part of zinc stearate processing aid,
(2) extruding the mixture on a Haake-Buchler System 40 Rheometer equipped with a twin-screw extruder head at 175-190-215-215°C and 65 rpm, cooling the extruded material in an ice bath, pelletizing the extruded material, injection molding the pellets into ⅛" (∼3.2 mm) test bars on a Battenfeld BSKM 100/40 machine at 216°C, and
(3) testing the bars for IZOD impact strength according to ASTM D 256-88.

The bars were found to have an IZOD impact strength of 1.4±0.1 ft-lbs/inch (∼4.8±0.3 J/cm) of notch.

### EXAMPLE 1

Comparative Example A was repeated except that the flame retardant, impact modifier, and processing aid were preblended in a Brabender mixer at 175°C and 66 rpm for two minutes, and the resultant blend was sheeted on a two-roll mill and chopped into small pieces in a Osterizer mixer to form a masterbatch before shaking them together with the HIPS and antimony trioxide in the paper bag. The test bars had an IZOD impact strength of 2.04±0.03 ft-lbs/inch (∼7.0±0.1 J/cm) of notch.

When the example was repeated except that the temperatures of the twin screw extruder were 160-190-215-215°C, the IZOD impact strength of the test bars was 2.02±0.05 ft-lbs/inch (∼7.0±0.2 J/cm) of notch. Thus, with both extrusion conditions, masterbatching increased the impact strength of the formulation by ∼46%.

### COMPARATIVE EXAMPLE B

A formulated ABS resin was prepared and tested by:
(1) shaking the following ingredients together in a plastic bag for two minutes: 64.9 parts of ABS resin (Dow Magnum® PG-914), 13.1 parts of polychloroethylene impact modifier (Tyrin® 3611 of Dow Chemical Co.), 5.0 parts of styrene/butadiene/styrene block copolymer impact modifier (Shell Kraton® D1102), 12.5 parts of decabromodiphenylethane flame retardant (Ethyl Corp.), 4.0 parts of Sb₂O₃, synergist, and 0.5 part of dibutyltin maleate stabilizer (Thermolite® 13 of Atochem No. Am.),
(2) extruding the mixture on a Haake-Buchler System 40 Rheometer equipped with a twin-screw extruder head at 210-210-220-220°C and 60 rpm, pelletizing the extruded material and drying it at 88°C for four hours, injection molding the pellets into ⅛" (∼3.2 mm) test bars on a Battenfeld BSKM 100/40 machine at 195°C, and
(3) testing the bars for IZOD impact strength according to ASTM D 256-88.

The bars were found to have a IZOD impact strength of 4.8±0.2 ft-lbs/inch (∼16.5±0.7 J/cm) of notch.

### EXAMPLE 2

A formulation comparable to that of Comparative Example B was prepared by:
(1) blending 13.1 parts of polychloroethylene impact modifier (Tyrin® 3611 of Dow Chemical Co.), 5.0 parts of styrene/butadiene/styrene block copolymer impact modifier (Shell Kraton® D1102), 12.5 parts of decabromodiphenylethane flame retardant (Ethyl Corp.), 0.5 part of zinc stearate processing aid, and 1.0 part of dibutyltin maleate stabilizer (Thermolite® 13 of Atochem No. Am.) in a Brabender mixer at 175°C and 66 rpm for two minutes, sheeting the resultant blend on a two-roll mill, and chopping it into small pieces on a Glouster grinder to form a masterbatch,
(2) dry-blending the masterbatch with 63.9 parts of ABS resin (Dow Magnum® PG-914) and 4.0 parts of Sb₂O₃ synergist, and
(3) extruding, pelletizing, drying, molding, and testing the formulation as in Comparative Example B.

The test bars had an IZOD impact strength of 9.0±0.4 ft-lbs/inch (∼31±1.4 J/cm) of notch ― an increase of ∼88% over the impact strength of Comparative Example B.

### EXAMPLE 3

Example 2 was repeated except that the styrene/butadiene/styrene block copolymer impact modifier was dry-blended with the masterbatch together with the ABS resin and synergist instead of being included in the masterbatch. The IZOD impact strength of the test bars was 5.8±0.2 ft-lbs/inch (∼20±0.7 J/cm) of notch.

### EXAMPLE 4

Example 2 was repeated except that the polychloroethylene impact modifier was dry-blended with the masterbatch together with the ABS resin and synergist instead of being included in the masterbatch. The IZOD impact strength of the test bars was 7.6±0.3 ft-lbs/inch (∼26.2±1.0 J/cm) of notch.

As demonstrated in Examples 3 and 4, the improvement in impact strength is not as great when less than all of the impact modifier is included in the masterbatch.

## Claims

1. A process for preparing a flame-retarded rubber-modified styrenic polymer formulation which comprises a halogenated flame retardant, a polymeric impact modifier, at least 50 wt% of HIPS or ABS resin, and 0-6 wt% of flame retardant synergist and which provides improved impact strength to articles made therefrom; said process comprising the steps of (a) forming a concentrate containing the halogenated flame retardant and the polymeric impact modifier and (b) blending the resultant concentrate with the HIPS or ABS resin.

2. The process of claim 1 wherein (a) the polymeric impact modifier is selected from one or more of the group consisting of styrene/butadiene/styrene triblock copolymers, styrene/isoprene/styrene triblock copolymers, styrene/butadiene diblock copolymers, polycaprolactone, functionalized ethylene/propylene copolymers, and poly(haloolefins) and (b) the halogenated flame retardant is selected from one or more of tetrahalobisphenol-A, N,N'-bis(tetrahalophthalimide), N,N'-ethylenebis(tetrahalophthalimide), halogenated polystyrene, pentahalobenzyl acrylate, and bis-halophenyl compounds of the structural formula: 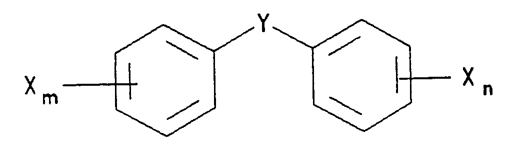 in which each X is selected independently from chlorine and bromine; m and n are the same or different integers of 1-5; and Y is selected from oxygen, alkylene, -NR- (where R is hydrogen or hydrocarbyl), alkylenedioxy, aryldioxy, and a chemical bond.

3. The process of claim 2 wherein the polymeric impact modifier comprises a styrene/butadiene/styrene triblock copolymer.

4. The process of claim 3 wherein the flame retardant is selected from decabromodiphenyl oxide, decabromodiphenylethane, 1,2-bis(tribromophenoxy)ethane, decabromodiphenyl amine, pentabromobenzyl acrylate, and mixtures thereof.

5. The process of claim 4 wherein the flame retardant is decabromodiphenylethane.

6. The process of claim 3 wherein the flame retardant is N,N'-ethylenebis(tetrabromophthalimide).

7. The process of any of the claims 1-6 wherein the formulation comprises 2-6 wt% of one or more flame retardant synergists selected from metal oxides, hydroxides, and silicates, boron compounds, and ferrocene and the process comprises (a) forming a concentrate containing the halogenated flame retardant, the flame retardant synergist, and the polymeric impact modifier and (b) blending the resultant concentrate with the HIPS or ABS resin.

8. The process of any of the claims 1-6 wherein the formulation comprises 2-6 wt% of one or more flame retardant synergists selected from metal oxides, hydroxides, and silicates, boron compounds, and ferrocene and the process comprises (a) forming a concentrate containing the halogenated flame retardant and the polymeric impact modifier and (b) blending the resultant concentrate with the HIPS or ABS resin and flame retardant synergist.

9. The process of any of the preceding claims wherein the formulation comprises at least 50 wt% HIPS resin, 5-25 wt% halogenated flame retardant, 1-12 wt% polymeric impact modifier, ad 0-6 wt% flame retardant synergist.

10. The process of any of the preceding claims wherein the formulation comprises at least 50 wt% ABS resin, 5-30 wt% halogenated flame retardant, 8-38 wt% polymeric impact modifier, and 0-6 wt% flame retardant synergist.

## Patentansprüche

1. Verfahren zur Herstellung einer mit Kautschuk modifizierten Styrolpolymerformulierung mit verzögerter Entflammbarkeit, die ein halogeniertes Flammverzögerungsmittel, einen polymeren Schlagfestmacher, mindestens 50 Gew.-% HIPS- (= high impact polystyrene = hochschlagzähes Polystyrol) oder ABS- (= Acrylnitril-Butadien-Styrol) Harz und 0 - 6 Gew.-% eines Flammverzögerungsynergisten enthält und die daraus hergestellten Gegenständen Schlagfestigkeit verleiht, wobei bei das Verfahren folgende Schritte umfaßt:
(a) Herstellung eines Konzentrats, das das halogenierte Flammverzögerungsmittel und den polymeren Schlagfestmacher enthält, und
(b) Vermischen des dabei entstehenden Konzentrats mit dem HIPS- oder ABS-Harz.

2. Verfahren nach Anspruch 1, bei dem (a) der polymere Schlagfestmacher aus einer oder mehreren Substanzen aus der aus Styrol/Butadien/Styrol-Triblockcopolymeren, Styrol/Isopren/Styrol-Triblockcopolymeren, Styrol/Butadien-Diblockcopolymeren, Polycaprolacton, funktionalisierten Ethylen/Propylen-Copolymeren und Poly(halogenolefinen) bestehenden Gruppe ausgewählt ist und (b) das halogenierte Flammverzögerungsmittel aus einer oder mehreren Substanzen aus Tetrahalogenbisphenol-A, N,N'-Bis(tetrahalogenphthalimid), N,N'-Ethylenbis(tetrahalogenphthalimid), halogeniertem Polystyrol, Pentahalogenbenzylacrylat und Bishalogenphenylverbindungen der Strukturformel 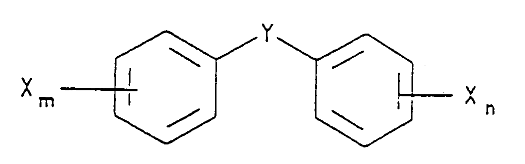 ausgewählt ist, in der jedes X unabhängig voneinander aus Chlor und Brom ausgewählt ist, m und n gleiche oder verschiedene ganze Zahlen von 1 bis 5 sind und Y aus Sauerstoff, Alkylen, -NR- (wobei R Wasserstoff oder Hydrocarbyl ist), Alkylendioxy, Aryldioxy und einer chemischen Bindung ausgewählt ist.

3. Verfahren nach Anspruch 2, bei dem der polymere Schlagfestmacher ein Styrol/Butadien/Styrol-Triblockcopolymer umfaßt.

4. Verfahren nach Anspruch 3, bei dem das Flammverzögerungsmittel aus Decabromdiphenyloxid, Decabromdiphenylethan, 1,2-Bis(tribromphenoxy)ethan, Decabromdiphenylamin, Pentabrombenzylacrylat und deren Mischungen ausgewählt ist.

5. Verfahren nach Anspruch 4, bei dem das Flammverzögerungsmittel Decabromdiphenylethan ist.

6. Verfahren nach Anspruch 3, bei dem das Flammverzögerungsmittel N,N'-Ethylenbis(tetrabromphthalimid) ist.

7. Verfahren nach einem der Ansprüche 1 bis 6, bei dem die Formulierung 2 bis 6 Gew.-% eines oder mehrerer aus Metalloxiden, Hydroxiden und Silicaten, Borverbindungen und Ferrocen ausgewählten Flammverzögerungssynergisten enthält und wobei (a) ein das halogenierte Flammverzögerungsmittel, den Flammverzögerungssynergisten und den polymeren Schlagfestmacher enthaltendes Konzentrat gebildet und (b) das dabei entstehende Konzentrat mit dem HIPS- oder ABS-Harz vermischt wird.

8. Verfahren nach einem der Ansprüche 1 bis 6, bei dem die Formulierung 2 bis 6 Gew.-% eines oder mehrerer aus Metalloxiden, Hydroxiden und Silicaten, Borverbindungen und Ferrocen ausgewählten Flammverzögerungssynergisten enthält und wobei (a) ein das halogenierte Flammverzögerungsmittel und den polymeren Schlagfestmacher enthaltendes Konzentrat gebildet und (b) das dabei entstehende Konzentrat mit dem HIPS- oder ABS-Harz und dem Flammverzögerungssynergisten vermischt wird.

9. Verfahren nach einem der vorstehenden Ansprüche, bei dem die Formulierung mindestens 50 Gew.-% HIPS-Harz, 5 bis 25 Gew.-% halogeniertes Flammverzögerungsmittel, 1 bis 12 Gew.-% polymeren Schlagfestmacher und 0 bis 6 Gew.-% Flammverzögerungssynergisten enthält.

10. Verfahren nach einem der vorstehenden Ansprüche, bei dem die Formulierung mindestens 50 Gew.-% ABS-Harz, 5 bis 30 Gew.-% halogeniertes Flammverzögerungsmittel, 8 bis 38 Gew.-% polymeren Schlagfestmacher und 0 bis 6 Gew.-% Flammverzögerungssynergisten enthält.

## Revendications

1. Procédé de préparation d'une formulation de polymère de styrène modifié par caoutchouc, à combustion retardée, qui comporte un ignifugeant halogéné, un agent polymère de modification de la résistance aux chocs, au moins 50% de résine HIPS ou ABS et 0-6% d'un agent assurant une synergie avec l'ignifugeant, et qui fournit une résistance aux chocs améliorée à des objets fabriqués à partir d'elle; ledit procédé comportant les étapes consistant à (a) former un concentré contenant l'ignifugeant halogéné et l'agent polymère de modification de la résistance aux chocs, et (b) mélanger le concentré obtenu à la résine HIPS ou ABS.

2. Procédé selon la revendication 1, dans lequel (a) l'agent polymère de modification de la résistance aux chocs est choisi parmi un ou plusieurs membres du groupe constitué de copolymères tri-séquencé de styrène/butadiène/styrène, de copolymères tri-séquencé de styrène/isoprène/styrène, de copolymères di-séquencé de styrène/butadiène, de la polycaprolactone, de copolymères d'éthylène/propylène fonctionnalisés et de poly(halooléfines), et (b) l'ignifugeant halogéné est choisi parmi l'un ou plusieurs de: tétrahalobisphénol-A, N,N'-bis(tétrahalophtalimide), N,N'-éthylènebis(tétrahalophtalimide), polystyrène halogéné, acrylate de pentahalobenzyle et composés de bis-halophényle de formule structurelle: 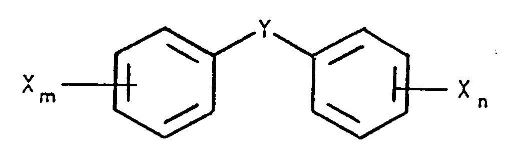 dans laquelle chaque X est choisi indépendamment parmi le chlore et le brome; m et n sont des entiers identiques ou différents valant 1-5; et Y est choisi parmi l'oxygène, un alkylène, -NR-(où R est l'hydrogène ou un hydrocarbyle), un alkylènedioxy, un aryldioxy et une liaison chimique.

3. Procédé selon la revendication 2, dans lequel l'agent polymère de modification de la résistance aux chocs comporte un copolymère tri-séquencé de styrène/butadiène/styrène.

4. Procédé selon la revendication 3, dans lequel l'ignifugeant est choisi parmi l'oxyde de décabromodiphényle, le décabromodiphényléthane, le 1,2-bis(tribromophénoxy)éthane, la décabromodiphénylamine, l'acrylate de pentabromobenzyle et des mélanges de ceux-ci.

5. Procédé selon la revendication 4, dans lequel l'ignifugeant est le décabromodiphényléthane.

6. Procédé selon la revendication 3, dans lequel l'ignifugeant est le N,N'-éthylènebis(tétrabromophtalimide).

7. Procédé selon l'une quelconque des revendications 1-6, dans lequel la formulation comporte 2-6% en poids d'un ou de plusieurs agents assurant une synergie avec l'ignifugeant, choisi parmi des silicates, des hydroxydes et des oxydes de métaux, des composés du bore et le ferrocène, et le procédé comporte (a) la formation d'un concentré contenant l'ignifugeant halogéné, l'agent assurant une synergie avec l'ignifugeant et l'agent polymère de modification de la résistance aux chocs, et (b) le mélange du concentré résultant avec la résine HIPS ou ABS.

8. Procédé selon l'une quelconque des revendications 1-6, dans lequel la formulation comporte 2-6% en poids d'un ou plusieurs agents assurant une synergie avec l'ignifugeant, choisi parmi des silicates, des hydroxydes et des oxydes de métaux, des composés du bore et le ferrocène, et le procédé comporte (a) la formation d'un concentré contenant l'ignifugeant halogéné et l'agent polymère de modification de la résistance aux chocs, et (b) le mélange du concentré résultant avec la résine HIPS ou ABS et l'agent assurant une synergie avec l'ignifugeant.

9. Procédé selon l'une quelconque des revendications précédentes, dans lequel la formulation comporte au moins 50% en poids de résine HIPS, 5-25% en poids d'ignifugeant halogéné, 1-12% en poids d'agent polymère de modification de la résistance aux chocs et 0-6% en poids d'un agent assurant une synergie avec l'ignifugeant.

10. Procédé selon l'une quelconque des revendications précédentes, dans lequel la formulation comporte au moins 50% en poids de résine ABS, 5-30% en poids d'ignifugeant halogéné, 8-38% en poids d'agent polymère de modification de la résistance aux chocs et 0-6% d'agent assurant une synergie avec l'ignifugeant.
